# EUROPÄISCHE PATENTSCHRIFT

(11) **EP 2 567 875 B1**
(45) Veröffentlichungstag und Bekanntmachung des Hinweises auf die Patenterteilung: **26.02.2020**
(21) Anmeldenummer: 12182845.3
(22) Anmeldetag: 03.09.2012
(51) Int. Cl.: B60W 30/18, B60T 7/22, B60W 30/095

(54) **Verfahren zum Steuern von Energiewandlungsprozessen in einem Fahrzeug**
Method for controlling energy conversion processes in a vehicle
Procédé de commande de processus de conversion d'énergie dans un véhicule

(30) Priorität: 08.09.2011 DE 102011082337
(43) Veröffentlichungstag der Anmeldung: 13.03.2013
(73) Patentinhaber: Bayerische Motoren Werke Aktiengesellschaft, 80809 München (DE)
(72) Erfinder: Augst, Alexander, 80937 München (DE); Raubitschek, Christian, 80333 München (DE)

(56) Entgegenhaltungen:
- EP-A1- 2 562 060
- DE-A1- 19 718 709
- DE-A1- 19 944 556
- DE-A1-102005 032 096
- DE-A1-102005 062 274
- US-A1- 2008 065 328

## Beschreibung

Die Erfindung betrifft ein Verfahren zum Steuern von Energiewandlungsprozessen in einem Fahrzeug.

In zunehmendem Maße erhalten elektronische Steuerungen für sicherheits- und effizienzsteigernde Fahrzeugfunktionen Einzug in aktuelle Fahrzeuge. Hierzu zählen Abstandsregelsysteme zum Steuern eines Abstands zu einem vorausfahrenden Fahrzeug, Geschwindigkeitsregelsysteme, Motor-Start-Stopp-Systeme, "Grüne-Welle"-Assistenten, ein sogenannter Segelbetrieb und viele andere. Jedes dieser Systeme wird mittels einer Steuerung geregelt, die eine Vielzahl an Parametern überwacht und basierend auf definierten Ereignissen das jeweilige System aktiviert, deaktiviert oder regelt.

Üblicherweise werden hierbei Informationen herangezogen, welche einem aktuellen Fahrzustand des Fahrzeugs entnommen werden, wie beispielsweise eine aktuelle Betätigung von Gas- oder Bremspedalen, oder eine aktuelle Beschleunigung bzw. Verzögerung des Fahrzeugs. Auch werden Navigationsdaten herangezogen, um "vorausschauend" einzelne dieser Funktionen zu steuern.

Hierbei liegt ein Fokus, soweit berücksichtigt, stets auf einem vor dem Fahrzeug liegenden Bereich, um die Fahrzustände des Fahrzeugs entsprechend anzupassen und somit den Fahrkomfort, einen Verbrauch des Fahrzeugs oder eine Sicherheit zu verbessern.

Nachteilig hieran erweist sich, dass eine entsprechende Steuerung der genannten Funktionen ein Bewegungsschema des Fahrzeugs zur Folge haben kann, das gegebenenfalls von einer Fahrweise anderer Verkehrsteilnehmer in der gegebenen Situation derart abweicht, dass das Fahrzeug leicht zum Hindernis für andere Fahrzeuge wird. Die Fahrweise kann in diesem Fall beispielsweise missverstanden werden oder zu Verärgerungen der anderen Verkehrsteilnehmer führen, wodurch gefährliche Situationen durch zu dichtes Auffahren bzw. Drängeln der nachfolgenden Verkehrsteilnehmer führen kann oder riskante Überholmanöver provoziert werden. Auch kann ein Verkehrsfluss insbesondere in einem Stadtverkehr unter Umständen aufgrund der genannten Funktionen nachteilig beeinflusst werden.

Außerdem ist aus der DE 199 44 556 A1 ein Verfahren und eine Vorrichtung zur Steuerung einer Bremsanlage bekannt, bei der eine Bremskraft eiens Kraftfahrzeugs aufgrund einer erkannten Kollisionsgefahr von hinten begrenzt ist.

Die DE 10 2005 032 096 A1 zeigt ein Verfahren zum Erkennen von Parklücken, bei dem auch nachfolgende Fahrzeuge erfasst und bei einem Bremsvorgang Berücksichtigung finden.

DE 197 18 709 A1 beschreibt ein Hybridfahrzeug, bei dem eine zusätzliche regenerative Bremskraft zur Unterstützung eines Bremsverhaltens genutzt wird. Beispielsweise kann damit ein Abstand zu einem vorausfahrenden Fahrzeug konstant gehalten werden.

Aufgabe der Erfindung ist es daher ein Verfahren zur Steuerung der Energiewandlungsprozesse des Fahrzeugs bereitzustellen, welches die beschriebenen Nachteile reduziert oder vollständig beseitigt und insbesondere eine Anwendung der Energiewandlungsprozesse entsprechend steuert.

Diese Aufgabe wird erfindungsgemäß mittels eines Verfahrens zum Steuern von Energiewandlungsprozessen mit den Merkmalen des Patentanspruchs 1 gelöst. Vorteilhafte Ausführungsformen ergeben sich aus den abhängigen Ansprüchen.

Demnach wird ein Verfahren zum Steuern von Energiewandlungsprozessen in einem Fahrzeug in Abhängigkeit eines nachfolgenden Verkehrsteilnehmers mit den nachfolgenden Schritten bereitgestellt:
a. Erfassen einer aktuellen Umgebung des Fahrzeugs,
b. Erkennen des nachfolgenden Verkehrsteilnehmers und
c. Ermitteln einer Bewegung des nachfolgenden Verkehrsteilnehmers,
d. Ermitteln, ob ein bereits eingesetztes und/oder ein noch einzusetzendes Steuern von Energiewandlungsprozessen voraussichtlich in Wechselwirkung mit der erkannten Bewegung des nachfolgenden Verkehrsteilnehmers stehen wird, und
e. Entscheiden, ob das Steuern des Energiewandlungsprozesses in Abhängigkeit von der ermittelten Wechselwirkung mit der erkannten Bewegung des nachfolgenden Verkehrsteilnehmers angewendet wird,
wobei die Energiewandlungsprozesse als Maßnahmen zur Energieoptimierung ein Gleiten, ein Segeln, ein Ausrollen, eine Aktivierung einer Rekuperation zur Bremsenergie-Rückgewinnung, eine Schubverzögerung und/oder eine Aktivierung einer Motor-Start-Stopp-Automatik des Fahrzeugs umfassen.

Dies bedeutet, dass für eine Steuerung von Energiewandlungsprozessen zunächst ein aktuelles Umfeld des Fahrzeugs erfasst wird und als Grundlage für nachfolgende Schritte herangezogen wird. Als aktuelles Umfeld ist die tatsächliche Umgebung des Fahrzeugs zu verstehen, also beispielsweise anderen Verkehrsteilnehmer oder Hindernisse, die nicht in Navigationsdaten hinterlegt sind.

Anschließend erfolgt erfindungsgemäß der Schritt des Erkennens eines nachfolgenden Verkehrsteilnehmers aus den Informationen zu dem erfassten Umfeld. Im Gegensatz zu bestehenden Systemen wird also nicht nur eine Umgebung des Fahrzeugs berücksichtigt, die in einer Längsrichtung VOR dem Fahrzeug liegt. Vielmehr erfolgt im Speziellen eine Berücksichtigung eines nachfolgenden Verkehrs. Es versteht sich, dass zusätzlich eine Erkennung eines sonstigen Umfelds des Fahrzeugs erfolgen kann, um zusätzlich ein seitliches und/oder vorderes Umfeld des Fahrzeugs für das vorgeschlagene Verfahren zu berücksichtigen.

In einem weiteren Schritt wird die Bewegung des erkannten nachfolgenden Verkehrsteilnehmers ermittelt. Nur so kann in einem darauffolgenden Schritt ermittelt werden, ob die Bewegung des nachfolgenden Verkehrsteilnehmers die Fahrweise bzw. die Fahrt des Fahrzeugs aktuell oder zukünftig tangiert und somit berücksichtigt werden muss. Insbesondere kann hierbei ermittelt werden, ob aktuelle oder zukünftige, noch vorzunehmende Steuerungsschritte betroffen sein könnten.

Wird dieser Ermittlungsschritt positiv beschieden, indem also eine mögliche Wechselwirkung erkannt wird, so wird entschieden, ob der Schritt des Steuerns des Energiewandlungsprozesses vorgenommen werden soll oder nicht. Wird infolge dessen ein Steuern des Energiewandlungsprozesses vorgesehen, so kann im Rahmen dieses Steuerns eine Ausprägung bzw. ein Umfang des Steuerns bestimmt werden. Dies bedeutet, dass im Rahmen der Steuerung der Energiewandlungsprozesse bedarfsabhängig und/oder in Abhängigkeit von der ermittelten Wechselwirkung variiert werden kann.

Als Wechselwirkung kann beispielsweise eine Behinderung des nachfolgenden Verkehrs durch das Fahrzeug bei Aktivierung oder bei einem weiteren Betrieb eines bereits aktivierten Energiewandlungsprozesses ermittelt werden. Ebenso können als Wechselwirkung eine drohende Auffahrgefahr des nachfolgenden Verkehrsteilnehmers und/oder ein dichtes Auffahren des nachfolgenden Verkehrsteilnehmers ermittelt werden. Selbstverständlich sind außerdem andere Wechselwirkungen möglich.

Beispielsweise kann das Steuern von Energiewandlungsprozessen ein Steuern eines Verzögerungsprozesses des Fahrzeugs umfasst. Dies bedeutet, dass insbesondere im Rahmen einer Verzögerung des Fahrzeugs ein nachfolgender Verkehr bzw. ein nachfolgender Verkehrsteilnehmer berücksichtigt werden kann, um eine Wechselwirkung aufgrund einer Anwendung oder einer ungünstigen Steuerung der Energiewandlungsprozesse zu verhindern.

Gemäß einer Ausführungsform erfolgt das Erfassen der aktuellen Umgebung mittels Nahfeld- und/oder Umfelderfassungsvorrichtungen. Hierzu zählen insbesondere eine Radar- oder eine Lidarsensorik, Kameras und/oder Ultraschallsensoren. Außerdem kann eine sogenannte Car2Car- und/oder Car2X-Kommunikation - also ein Austausch von Daten zwischen mehreren Fahrzeugen bzw. zwischen einem Fahrzeug und einer Infrastruktur erfolgen. Hierbei können unter anderem drahtlosen Kommunikationswege genutzt werden, insbesondere eine Kommunikation mittels WLAN und/oder Mobilfunkdiensten bzw. Mobilfunkverbindung.

Mittels der genannten Vorrichtungen ist es in vorteilhafter Weise möglich das aktuelle Umfeld des Fahrzeugs und somit andere Verkehrsteilnehmer oder andere temporäre Hindernisse zu erfassen, die nicht in Datenbanken hinterlegt oder hinterlegbar sind.

Vorzugsweise umfasst das Ermitteln der Bewegung des nachfolgenden Verkehrsteilnehmers ein Ermitteln einer aktuellen Relativposition des nachfolgenden Verkehrsteilnehmers. Es kann also ein momentaner Abstand des nachfolgenden Verkehrsteilnehmers zu dem Fahrzeug ermittelt werden.

Ebenfalls vorzugsweise kann das Ermitteln der Bewegung des nachfolgenden Verkehrsteilnehmers ein Erkennen von Relativbewegungen und/oder Relativbeschleunigungen zu dem Fahrzeug umfasst. Somit lässt sich eine Bewegung und/oder eine Beschleunigung des nachfolgenden Verkehrsteilnehmers ermitteln, um eine Relevanz des erkannten Verkehrsteilnehmers für die nachfolgenden Entscheidungsschritte zu beurteilen. Es lässt sich also einschätzen, ob die Anwesenheit des nachfolgenden Verkehrsteilnehmers überhaupt relevant wird oder nicht.

Beispielsweise kann aufgrund einer Relativgeschwindigkeit des nachfolgenden Verkehrsteilnehmers in Richtung des Fahrzeugs in Verbindung mit dessen momentaner Position abgeschätzt werden, ob unter Beibehaltung dieser Geschwindigkeit eine Wechselwirkung, sprich eine gegenseitige Beeinflussung mit dem Fahrzeug, zu erwarten ist. Vorzugsweise kann hierzu alternativ oder zusätzlich die Relativbeschleunigung des nachfolgenden Verkehrsteilnehmers bezüglich des Fahrzeugs ermittelt und den nachfolgenden Schritten zur Entscheidungsfindung zugrunde gelegt werden.

Gemäß einer weiteren Ausführungsform umfasst das Ermitteln der Bewegung des nachfolgenden Verkehrsteilnehmers ein Ermitteln einer voraussichtlichen Bewegung. Auf diese Weise kann also eine Bewegung des nachfolgenden Verkehrsteilnehmers für einen zukünftigen Zeitpunkt abgeschätzt werden und der weiteren Betrachtung zugrunde gelegt werden.

Vorzugsweise kann das Erkennen der voraussichtlichen Bewegung ein Ermitteln einer Bewegungsabsicht umfassen. Es wird somit eine Absicht des nachfolgenden Verkehrsteilnehmers anhand definierter Verhaltensmuster erkannt oder für die Zukunft abgeschätzt. Beispielsweise kann ein Einlenken von Fahrzeugrädern erkannt werden und entsprechend einer Fahrzeugumgebung abgeschätzt werden, ob der nachfolgende Verkehrsteilnehmer beispielsweise abbiegen will und somit dem Fahrzeug nicht weiter folgt oder aber dieses überholen möchte. Im ersten Fall kann die Information dazu genutzt werden, dass eine Wechselwirkung mit dem Fahrzeug nicht zu befürchten ist, wenn der andere Verkehrsteilnehmer abbiegt. Das Fahrzeug kann demnach den Energiewandlungsprozess starten bzw. beibehalten. Wird dagegen erkannt, dass der nachfolgende Verkehrsteilnehmer zum Überholen ansetzt bzw. die gelenkten Räder hierzu einlenkt, kann auf die Steuerung des Energiewandlungsprozesses verzichtet werden, um das Fahrzeug beispielsweise nicht zusätzlich zu verlangsamen und somit eine Gefahrensituation zu verschärfen bzw. zu schaffen. Selbstverständlich können ebenso andere Gesten oder Bewegungsmuster des nachfolgenden Verkehrsteilnehmers für das Ermitteln einer Bewegungsabsicht herangezogen werden.

Entsprechend einer Ausführungsform umfasst das Ermitteln einer Bewegungsabsicht ein Erkennen von Signalen und/oder eine Wahrscheinlichkeitsbewertung. Zum Beispiel kann das Aufleuchten eines Blinkers des nachfolgenden Fahrzeugs als Lichtsignal erkannt werden und entsprechend der gesamten Fahrzeugumgebung abgeschätzt werden, ob der nachfolgende Verkehrsteilnehmer abbiegen will oder dieses überholen möchte. Außerdem können weitere von den Fahrzeugen ausgesendete Signale oder Informationen eingesetzt werden, um eine Bewegungsabsicht zu erkennen. So können zwischen mehreren Fahrzeugen ausgetauschte Informationen, wie zum Beispiel Informationen über einen aktivierten Segelmodus, einen aktivierten Bremsvorgang, oder ähnliches ausgetauscht und insbesondere dem vorausfahrenden Fahrzeug mitgeteilt werden. Dieses weiß dann, dass das nachfolgende Fahrzeug ebenfalls verzögert wird und kann entsprechend die eigenen Energiewandlungsprozesse anstoßen bzw. weiter betrieben.

Wie beschrieben, kann der Ermittlung der Bewegungsabsicht eine Wahrscheinlichkeitsbewertung zugrunde gelegt werden, um die unterschiedlichen Informationen zu deuten und hieraus Schlussfolgerungen für die nachfolgenden Schritte des beschriebenen Verfahrens zu gewinnen.

Des Weiteren können für den Schritt des Entscheidens externe Informationen herangezogen werden. Als externe Informationen sind Informationen zu verstehen, die nicht direkt aus dem aktuellen Umfeld erfasst werden. So ist es beispielsweise möglich neben den Informationen zu der aktuellen Umgebung, wie beispielsweise über andere Fahrzeuge, auch beispielsweise Informationen zu der momentan befahrenen Straße aus dem Navigationsgerät abzurufen oder hinterlegte Verkehrsregeln bei der Entscheidung einzubeziehen. Insbesondere können ein erlaubter Mindestabstand zwischen den Fahrzeugen, eine zulässige Geschwindigkeit und/oder ein Abstand von Fahrzeug zur nächsten Geschwindigkeitsbegrenzung einbezogen werden, um die Bewegung des nachfolgenden Verkehrsteilnehmers zu bewerten bzw. den Entscheidungsschritt betreffend das Steuern des Energiewandlungsprozesses durchzuführen.

Entsprechend weiterer Ausführungsformen können die voranstehend genannten Energiewandlungsprozesse beispielsweise Maßnahmen zur Energieoptimierung des Fahrzeugs umfassen. Hierzu zählen insbesondere ein sogenanntes Gleiten und/oder Segeln des Fahrzeugs, bei dem ein Antriebsstrang antriebsmomentenfrei geschaltet wird. Auch ein Ausrollen, ein Aktivieren einer Rekuperation zur Bremsenergie-Rückgewinnung oder eine Schubverzögerung sind möglich. Darüber hinaus kann eine Motor-Start-Stopp-Funktionalität zu den genannten Energiewandlungsprozessen gezählt werden.

Des Weiteren wird eine Vorrichtung zum Steuern von Energiewandlungsprozessen in einem Fahrzeug in Abhängigkeit eines nachfolgenden Verkehrsteilnehmers vorgesehen, wobei die Vorrichtung mindestens ein Mittel umfasst, welche zum Ausführen des beschriebenen Verfahrens ausgebildet ist. Insbesondere umfasst die Vorrichtung mindestens ein Mittel, das zum Ausführen mindestens eines der beschriebenen Verfahrensschritte ausgebildet ist. Außerdem kann die Vorrichtung mit den beschriebenen Vorrichtungen und Sensoren, insbesondere den beschriebenen Nahfeld- und/oder Umfelderkennungsvorrichtungen kommunikationstechnisch zum Austausch von Signalen bzw. Informationen verbunden sein. Ebenso können diese von der Vorrichtung zum Steuern von Energiewandlungsprozessen umfasst bzw. als Teil dieser Vorrichtung zum Steuern von Energiewandlungsprozessen ausgebildet sein.

Außerdem wird ein Fahrzeug mit der beschriebenen Vorrichtung zum Steuern von Energiewandlungsprozessen in einem Fahrzeug in Abhängigkeit eines nachfolgenden Verkehrsteilnehmers vorgeschlagen.

Des Weiteren umfasst die Erfindung auch eine Recheneinheit zur Ausführung des erfindungsgemäßen Verfahrens. Es kann somit also ein Computerprogrammprodukt mit einem Datenträger mit Programmcode und/oder einem ausführbaren Programm bereitgestellt werden, der bzw. das dazu ausgebildet ist, das beschriebene Verfahren durchzuführen, wenn der Programmcode bzw. das ausführbare Programm auf einer entsprechend ausgebildeten Recheneinheit ausgeführt wird.

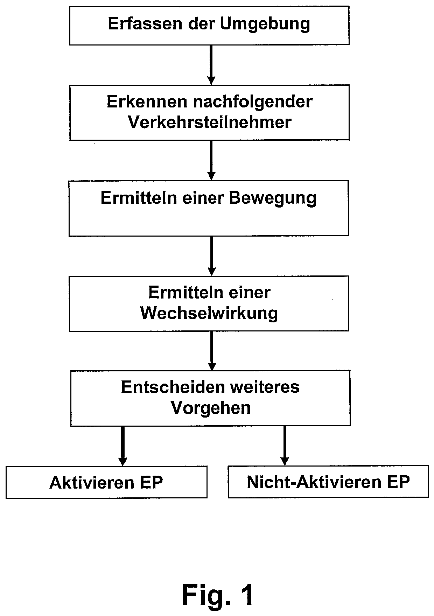

Die Erfindung wird nachfolgend unter Bezugnahme auf die Zeichnung anhand eines Ausführungsbeispiels näher erläutert. Die Zeichnung zeigt in Fig. 1 ein Flussdiagramm eines beispielhaften Ablaufs des erfindungsgemäßen Verfahrens zur Steuerung eines Energiewandlungsprozesses in Abhängigkeit von einem nachfolgenden Verkehrsteilnehmer. In einem ersten Schritt erfolgt ein Erfassen einer Umgebung des Fahrzeugs, beispielsweise mittels Nahfeld- und/oder Umfelderfassungsvorrichtungen, insbesondere Radar- oder ultraschallbasierte Systeme oder Kamerasysteme. Selbstverständlich sind ebenso andere hierzu geeignete Vorrichtungen zum Erfassen der Umgebung möglich.

In einem nachfolgenden Schritt wird aus den erfassten Umgebungsinformationen ein nachfolgender Verkehrsteilnehmer erkannt, soweit vorhanden. Im positiven Fall erfolgt ein Ermitteln einer Bewegung des erkannten nachfolgenden Verkehrsteilnehmers, beispielsweise zum Ermitteln seiner Position, seiner Relativgeschwindigkeit und/oder seiner Relativbeschleunigung bezüglich des Fahrzeugs. Anhand dieser Informationen kann in einem folgenden Schritt ermittelt werden, ob ein bereits eingesetztes und/oder ein noch einzusetzendes Steuern von Energiewandlungsprozessen voraussichtlich in Wechselwirkung mit der erkannten Bewegung des nachfolgenden Verkehrsteilnehmers stehen wird. Dies kann anhand einfacher Berechnungen mittels der ermittelten Position, der Relativgeschwindigkeit bzw. der Relativbeschleunigung aber auch unter Berücksichtigung einer Wahrscheinlichkeitsbetrachtung eines möglichen Verhaltens des nachfolgenden Verkehrsteilnehmers erfolgen.

Auf Grundlage der gewonnenen Informationen wird anschließen entschieden, ob das Steuern des Energiewandlungsprozesses in Abhängigkeit von der ermittelten Wechselwirkung mit der erkannten Bewegung des nachfolgenden Verkehrsteilnehmers angewendet wird, oder nicht. Entsprechend der Entscheidung erfolgt sodann ein Aktivieren bzw. Fortführen eines laufenden Energiewandlungsprozesses oder aber dessen Deaktivierung bzw. wird eine Aktivierung verhindert.

## Patentansprüche

1. Verfahren zum Steuern von Energiewandlungsprozessen in einem Fahrzeug in Abhängigkeit eines nachfolgenden Verkehrsteilnehmers mit den nachfolgenden Schritten:
a. Erfassen einer aktuellen Umgebung des Fahrzeugs,
b. Erkennen des nachfolgenden Verkehrsteilnehmers und
c. Ermitteln einer Bewegung des nachfolgenden Verkehrsteilnehmers,
d. Ermitteln, ob ein bereits eingesetztes und/oder ein noch einzusetzendes Steuern von Energiewandlungsprozessen voraussichtlich in Wechselwirkung mit der erkannten Bewegung des nachfolgenden Verkehrsteilnehmers stehen wird,
e. Entscheiden, ob das Steuern des Energiewandlungsprozesses in Abhängigkeit von der ermittelten Wechselwirkung mit der erkannten Bewegung des nachfolgenden Verkehrsteilnehmers angewendet wird,
wobei die Energiewandlungsprozesse als Maßnahmen zur Energieoptimierung ein Gleiten, ein Segeln, ein Ausrollen, eine Aktivierung einer Rekuperation zur Bremsenergie-Rückgewinnung, eine Schubverzögerung und/oder eine Aktivierung einer Motor-Start-Stopp-Automatik des Fahrzeugs umfassen.

2. Verfahren nach Anspruch 1, wobei das Steuern von Energiewandlungsprozessen ein Steuern eines Verzögerungsprozesses des Fahrzeugs umfasst.

3. Verfahren nach einem der Ansprüche 1 oder 2, wobei das Erfassen der aktuellen Umgebung mittels Nahfeld- und/oder Umfelderfassungsvorrichtungen erfolgt.

4. Verfahren nach einem der Ansprüche 1 bis 3, wobei das Ermitteln der Bewegung des nachfolgenden Verkehrsteilnehmers ein Ermitteln einer aktuellen Relativposition des nachfolgenden Verkehrsteilnehmers umfasst.

5. Verfahren nach einem der Ansprüche 1 bis 4, wobei das Ermitteln der Bewegung ein Erkennen von Relativbewegungen und/oder Relativbeschleunigungen zu dem Fahrzeug umfasst.

6. Verfahren nach einem der Ansprüche 1 bis 5, wobei das Ermitteln der Bewegung des nachfolgenden Verkehrsteilnehmers ein Ermitteln einer voraussichtlichen Bewegung umfasst.

7. Verfahren nach Anspruch 6, wobei das Erkennen der voraussichtlichen Bewegung ein Ermitteln einer Bewegungsabsicht umfasst.

8. Verfahren nach Anspruch 7, wobei das Ermitteln einer Bewegungsabsicht ein Erkennen von Signalen und/oder eine Wahrscheinlichkeitsbewertung umfasst.

9. Verfahren nach einem der Ansprüche 1 bis 8, wobei für den Schritt des Entscheidens externe Informationen herangezogen werden.

10. Verfahren nach einem der Ansprüche 1 bis 9, wobei das Steuern der Energiewandlungsprozesses bedarfsabhängig und/oder in Abhängigkeit von der ermittelten Wechselwirkung variiert wird.

11. Vorrichtung zum Steuern von Energiewandlungsprozessen in einem Fahrzeug in Abhängigkeit eines nachfolgenden Verkehrsteilnehmers, wobei die Vorrichtung mindestens ein Mittel umfasst, welche zum Ausführen eines Verfahrens nach einem der Ansprüche 1 bis 10 ausgebildet ist.

12. Computerprogrammprodukt mit einem Datenträger mit Programmcode, der dazu ausgebildet ist, ein Verfahren nach einem der Ansprüche 1 bis 10 auszuführen, wenn der Programmcode auf einer entsprechend ausgebildeten Recheneinheit ausgeführt wird.

## Claims

1. A method for controlling energy conversion processes in a vehicle dependent on a road user following behind, having the following steps:
a. detecting current surroundings of the vehicle,
b. recognising the road user following behind, and
c. ascertaining a movement of the road user following behind,
d. ascertaining whether a control of energy conversion processes which is already used and/or is still to be used is anticipated to correlate with the recognised movement of the road user following behind,
e. deciding whether the control of the energy conversion process is applied dependent on the ascertained correlation with the recognised movement of the road user following behind,
wherein the energy conversion processes comprise as measures for optimising energy gliding, coasting, freewheeling, activation of a recuperation means for recovery of braking energy, engine braking and/or activation of an automatic engine start/stop control of the vehicle.

2. A method according to Claim 1, wherein the control of energy conversion processes comprises control of a deceleration process of the vehicle.

3. A method according to one of Claims 1 or 2, wherein the detection of the current surroundings takes place by means of near-field and/or environment detection devices.

4. A method according to one of Claims 1 to 3, wherein the ascertaining of the movement of the road user following behind comprises ascertaining of a current relative position of the road user following behind.

5. A method according to one of Claims 1 to 4, wherein the ascertaining of the movement comprises recognition of relative movements and/or relative accelerations relative to the vehicle.

6. A method according to one of Claims 1 to 5, wherein the ascertaining of the movement of the road user following behind comprises ascertaining of an anticipated movement.

7. A method according to Claim 6, wherein the recognition of the anticipated movement comprises ascertaining of a movement intention.

8. A method according to Claim 7, wherein the ascertaining of a movement intention comprises recognition of signals and/or a probability assessment.

9. A method according to one of Claims 1 to 8, wherein external information is used for the step of deciding.

10. A method according to one of Claims 1 to 9, wherein the control of the energy conversion process is varied dependent on requirements and/or dependent on the ascertained correlation.

11. A device for controlling energy conversion processes in a vehicle dependent on a road user following behind, wherein the device comprises at least one means which is designed to carry out a method according to one of Claims 1 to 10.

12. A computer program product with a data medium with program code which is designed to carry out a method according to one of Claims 1 to 10 if the program code is executed on a correspondingly designed arithmetic logic unit.

## Revendications

1. Procédé de commande de processus de conversion d'énergie dans un véhicule en fonction d'un participant au trafic qui suit, comportant les étapes suivantes consistant à :
a. identifier l'environnement actuel du véhicule,
b. identifier le participant au trafic qui suit,
c. déterminer le déplacement du participant au trafic qui suit,
d. déterminer si une commande déjà engagée et/ou une commande encore à engager de processus de conversion d'énergie devrait être effectuée en interaction avec le déplacement identifié du participant au trafic qui suit,
e. décider si la commande du processus de conversion d'énergie sera appliquée en fonction de l'interaction déterminée avec le déplacement identifié du participant au trafic qui suit,
les processus de conversion d'énergie comprenant, en tant que mesures permettant une optimisation de l'énergie, un glissement, une roue libre, un roulement, une activation d'une récupération d'une énergie de freinage, un ralentissement de la poussée et/ou une activation du système automatique d'arrêt démarrage du moteur.

2. Procédé conforme à la revendication 1,
selon lequel la commande des processus de conversion d'énergie comprend une commande d'un processus de ralentissement du véhicule.

3. Procédé conforme à l'une des revendications 1 et 2,
selon lequel la détection de l'environnement actuel est effectuée au moyen de dispositifs de détection de l'environnement proche et/ou de l'environnement aux alentours.

4. Procédé conforme à l'une des revendications 1 à 3,
selon lequel la détermination du déplacement du participant au trafic qui suit comprend une détermination de la position actuelle relative du participant au trafic qui suit.

5. Procédé conforme à l'une des revendications 1 à 4,
selon lequel la détermination du déplacement comprend une identification de déplacements relatifs et/ou d'accélérations relatives par rapport au véhicule.

6. Procédé conforme à l'une des revendications 1 à 5,
selon lequel la détermination du déplacement du participant au trafic qui suit comprend la détermination d'un déplacement probable.

7. Procédé conforme à la revendication 6,
selon lequel l'identification du déplacement probable comprend la détermination d'une intention de déplacement.

8. Procédé conforme à la revendication 7,
selon lequel la détermination d'une intention de déplacement comprend l'identification de signaux et/ou une analyse de vraisemblance.

9. Procédé conforme à l'une des revendications précédentes,
selon lequel lors de l'étape de décision on prend en considération des informations externes.

10. Procédé conforme à l'une des revendications 1 à 9,
selon lequel la commande du processus de conversion d'énergie est modifiée selon la demande et/ou en fonction de l'interaction déterminée.

11. Dispositif de commande de processus de conversion d'énergie dans un véhicule en fonction d'un participant au trafic qui suit, ce dispositif comprenant au moins un moyen qui est réalisé pour permettre la mise en œuvre d'un procédé conforme à l'une des revendications 1 à 10.

12. Produit-programme d'ordinateur comportant un support de données comprenant un code de programme qui est réalisé pour permettre la mise en œuvre d'un procédé conforme à l'une des revendications 1 à 10 lorsque le code de programme est mis en œuvre sur une unité de calculé réalisée de manière correspondante.
